# EUROPEAN PATENT SPECIFICATION

(11) **EP 3 118 373 B1**
(45) Date of publication and mention of the grant of the patent: **29.04.2020**
(21) Application number: 15176882.7
(22) Date of filing: 15.07.2015
(51) Int. Cl.: D21H 27/22, D21H 27/26, D21H 17/37, D21H 19/24, D21H 19/26

(54) **METHOD OF MANUFACTURING A FLEXIBLE FILM AND ITS USE**
VERFAHREN ZUR HERSTELLUNG EINER FLEXIBLEN FOLIE UND VERWENDUNG DAVON
PROCÉDÉ DE FABRICATION D'UN FILM SOUPLE ET SON UTILISATION

(43) Date of publication of application: 18.01.2017
(73) Proprietor: surfactor Germany GmbH, 45141 Essen (DE)
(72) Inventor: Silventoinen, Ilpo, 59800 Kesälahti (FI)
(74) Representative: von Renesse, Dorothea

(56) References cited:
- WO-A1-2010/122078
- US-A- 3 448 001
- US-A- 4 207 379

## Description

### FIELD OF THE INVENTION

The present invention relates to a method of manufacturing a resin impregnated and coated carrier material, the resin impregnated and coated carrier material and its use for the production of layered materials, in particular of wood products such as or based on plywood, chip-board, fibre board and OSB products and the like.

### BACKGROUND OF THE INVENTION

Various methods for the production of resin impregnated carrier materials are known. Typically, carrier materials such as paper are impregnated with thermosetting resins.

Use of thermosetting resins for impregnating carrier materials allows for their cost efficient production. Respective carrier materials impregnated with said thermosetting resins are known for their good stability and high heat and chemical resistance. Flexibility of the resulting film can be improved by adding polyacrylate as a thermoplastic resin to respective impregnating dispersions.

Carrier materials impregnated with thermosetting and thermoplastic resins are known from GB 1,233,396 A. The impregnated carrier material may further be coated with a thermosetting resin. This document also discloses a process for the production of a wood board overlaid with such an impregnated and optionally coated carrier material.

However, the compatibility of a coating composition comprising a thermosetting resin applied onto a carrier material which has been impregnated with a polyacrylate containing dispersion can be critical. It has been observed and there is, hence, a risk that the resulting impregnated and coated carrier material sticks to the press plate when it is laminated onto a panel such as a wood-based material. This sticking problem is particularly prominent and seems to be significantly increased when high concentrations of polyacrylate are present when impregnating, usually in case more than about 10 % by weight of polyacrylate based on the weight of the dispersion for impregnation are used. The latter considerably distorts the manufacture of laminated panels, i.e. layered materials such as laminated wood-based materials.

Hence, in one aspect it is an object of the present invention to provide a process of manufacturing an impregnated and coated carrier material (hereinafter also referenced as "film"), which is less susceptible to sticking to hot press plates when overlaying a panel with that film. The invention also pertains to the film provided with that process. A panel overlaid with such film, especially a wood-based material overlaid with such film, having a high flexibility is also provided.

### SUMMARY OF THE INVENTION

This problem is solved by providing a method of manufacturing a film according to claim 1 as well as with the subject-matter claimed in further independent claims. Preferred embodiments of the invention are subject matter of further dependent claims.

The problem can especially be solved by a method of manufacturing a film for overlaying a panel, in particular a wood-based material, comprising the steps of
a) providing a carrier material,
b) impregnating the carrier material with an impregnating dispersion comprising a resin component which comprises a polyacrylate resulting in a wet impregnated carrier material,
c) coating the wet impregnated carrier material with a coating composition comprising a thermosetting resin.

This method is suitable for providing a film which is especially suitable to be used for overlaying a panel, e.g. a wood-based material, resulting in an advantageously flexible layered material with increased internal bonding.

The inventors have found that it is an important factor in order to alleviate or avoid sticking that the impregnated carrier material remains wet after the impregnation step. Hence the thermosetting comprising coating composition is coated onto the impregnated carrier material while this impregnated carrier material is still wet. Accordingly, the impregnated carrier material is not allowed to get dry in between the impregnation step and the coating step. In an advantageous embodiment, this means that the impregnating dispersion comprising the polyacrylate is still in the liquid state when it comes into contact with the thermosetting resin. In a particular embodiment, the condition that the carrier material is not allowed to get dry avoids a substantial cross-linking of the polyacrylate prior to the coating step, i.e. before the coating composition is applied. This process may also be defined as a "wet-on-wet" process.

Without being bound by theory, the liquid state of the impregnating dispersion when the coating composition with the thermosetting is applied is thought to facilitate a crosslinking between the polyacrylate and the thermosetting resin in the coating composition. Therewith a better cohesion of the thermosetting resin in the coating composition to the polyacrylate impregnated carrier material is achieved. In this context, the exposure of the polyacrylate to the hot press plates is expected to be reduced when the film is laminated onto a panel - meaning that less polyacrylate comes into contact with the press plate and the sticking problem is reduced.

The method according to the invention is particularly advantageous when higher concentrations of polyacrylate are used. Higher concentrations of polyacrylate improve the flexibility of the resulting film and the panel overlaid therewith, i.e. of the resulting layered material. Higher polyacrylate concentrations are generally desired. However with higher polyacrylate concentrations the sticking problem significantly increases. This can - as outlined above - unexpectedly be reduced with the process according to the invention. Hence the invention allows for increasing the polyacrylate concentration without being limited in the further processing of the film by the sticking problem.

The impregnating dispersion comprises a "resin component" which is at least formed by the polyacrylate and refers to the total amount of resins including compounds such as monomers, dimers or oligomers suitable and intended to form a resin, i.e. to further crosslink, e. g. after applying the impregnating dispersion to the carrier material and an optional drying step. Said resin component may contain further resins in addition to the polyacrylate, preferably at least a thermosetting resin, more preferably the resin component comprises and further preferred consists of the polyacrylate and a thermosetting resin. Hence, the impregnating dispersion may contain further resins in addition to the polyacrylate, wherein the polyacrylate and these optional resins form the resin component of the impregnating dispersion. The polyacrylate is present in the impregnating dispersion in an amount of at least 60 % by weight and even more preferred in an amount of at least 70 % by weight, more preferred in an amount of at least 80 % by weight and more preferred in an amount of at least 95 % by weight based on the weight of the resin component in the impregnating dispersion.

In a particularly preferred embodiment, the impregnating dispersion comprises the polyacrylate in an amount of at least 98 % by weight based on the weight of the resin component in the impregnating dispersion.

The impregnating dispersion may comprise the polyacrylate even in an amount of 100% by weight based on the weight of the resin component in the impregnating dispersion. Hence, the resin component only consists of polyacrylate in these embodiments, i.e. polyacrylate is the sole resin present in the impregnating dispersion and no other resin is present.

In addition to the resin component, the impregnating dispersion naturally comprises a solvent. The skilled person is able to select suitable solvents to prepare a dispersion of respective resin component used according to the invention. Possible solvents are, for example, water, alcohols, in particular glycols, esters, in particular ethyl acetate, alkanes, in particular heptanes or hexanes, in particular n-heptane, acetones, in particular acetylacetone, aromats, in particular toluene or xylene, and mixtures thereof. In a preferred embodiment, the solvent comprises water. A solvent comprising water is cost efficient and environmentally beneficial due to reduced VOC (volatile organic compound) emission compared with organic solvents as such. In another preferred embodiment, the solvent in the impregnating dispersion consists of water.

The impregnating dispersion may in addition to the resin component and solvent further comprise additives, such as, but not limited to surfactants, softeners, hardeners, wetting agents, anti-foam agents, diluents and/or alkali or mixtures thereof, dyes or release agents or modifiers, cross-linking agents, or mixtures thereof. Additives, for example, include compounds selected from the group consisting of wax, oils, fats, fatty acids, alkanes, alkenes and their derivatives and mixtures thereof, especially a compound selected from the group consisting of silicone oil, paraffin, stearin, stearic acid, alkene ketene dimer (AKD), alkenyl succinic anhydride (ASA), tall oil fatty acid, bitumen, pitch and mixtures thereof. In particular additives present in the impregnating dispersion comprise paraffin, alkene ketene dimer (AKD), bitumen, pitch or mixtures thereof. Preferably, a cross-linking agent is not required in the impregnating dispersion.

The amount of resin component in the impregnating dispersion amounts to at least 30 % by weight, more preferably at least 35 % by weight, still more preferably at least 40 % by weight, in particular more than 43 % by weight based on the weight of the impregnating dispersion.

In a particularly preferred embodiment, the polyacrylate comprises acrylic and methacrylic esters as monomers. Preferably, the polyacrylate is alkaline or moisture resistant and most preferably both.

A preferred thermosetting resin in the impregnating dispersion (in embodiments, in which the impregnating dispersion comprises a thermosetting resin) and in the coating composition is a phenolic resin, a melamine resin or a mixture thereof.

In another aspect of the invention a film is provided which is manufactured by the method as claimed in the claims with exceptional properties such as a high flexibility. In particular, this film has an exceptionally high cracking resistance even when applied to a panel which is plywood, in particular softwood plywood. Moreover, the film allows for an increased water resistance, shows a reduced formaldehyde emission as it allows the reduction of the amount of formaldehyde-based resins and has good masking properties of surface and even internal defects of the panel onto which the film is applied. Furthermore, the film is suitable to prevent bleeding of additives such as AKD, bitumen or pitch. Said film also has exceptional mechanical properties and resistance against chemicals and other harsh conditions.

This film is especially suitable to be used for overlaying a panel, in particular a wood-based material, in order to provide a layered material. The inventors have found that the film provided properly bonds to panels, in particular to wood-based materials. Thus, a method for overlaying a panel, in particular a wood-based material, with a film manufactured according to the invention is also provided. The resulting layered material shows a high flexibility and service durability even under harsh conditions of handling and use. The provided layered materials manufactured according to the invention - namely by applying a film according to the invention to a panel, in particular a wood-based material - allow for an increased internal bonding which can be expressed and measured with the well-known value called "wood failure". In this context, an increased wood failure of almost 100 % can be obtained, meaning that it is impossible to further increase bonding of the film to the wood-based material as well as within the film, because the failure continues to take place within the wood. I.e. high wood failure is generally considered positive as it indicates that the film strongly adheres to the wood-based material or that high adherence of the film is achieved.

### DETAILED DESCRIPTION OF THE INVENTION

According to the invention, a method of manufacturing a film (impregnated and coated carrier material) is provided which comprises the steps of providing a carrier material, impregnating the carrier material with an impregnating dispersion comprising a resin compound which comprises a polyacrylate resulting in a wet impregnated carrier material, and coating the wet impregnated carrier material with a coating composition comprising a thermosetting resin. This film can be used for manufacturing a layered material by overlaying a panel therewith without the occurrence of substantial sticking problems. The film and the overlaid panel (further referenced as "layered material") have a high flexibility.

The flexibility of the layered material can be determined as its minimum bending radius. The more flexible a film or the resulting layered material is, the smaller is the minimum bending radius. The minimum bending radius can be compared to a layered material which does not comprise a polyacrylate in the impregnating dispersion used for impregnation, for example a wood-based material overlaid with a paper impregnated with a phenolic resin (no further coating). In one embodiment, the ratio of the minimum bending radius of an overlaid panel according to the invention, i. e. a layered material, and the same panel overlaid with a paper impregnated with a phenolic resin is less than 0.8, preferably less than 0.7, even more preferably less than 0.6. In a particularly preferred embodiment, the ratio of the minimum bending radius of an overlaid panel according to the invention, i. e. a layered material, and the same panel overlaid with a paper impregnated with a phenolic resin is less than 0.5.

The processes of impregnating or coating a carrier material in general are well known to the skilled person in the art. "Impregnation" accordingly means that a carrier material comes into contact with an impregnating composition such as an impregnating dispersion and the latter at least partly penetrates into the carrier material. Hence, the impregnated carrier material is preferably at least partly saturated with the impregnating dispersion comprising the polyacrylate. It was surprisingly found that the penetration of the polyacrylate into the carrier material (i.e. the at least partly saturation of the carrier material with the polyacrylate) does not weaken the internal bonds of a film produced with said impregnated carrier material and thus does not impair further processing and properties of said film and a resulting layered material. Optionally, the impregnation step can be repeated.

The impregnation step of the present invention is preferably performed by immersing the carrier material in a bath containing the impregnating dispersion comprising a resin component which comprises a polyacrylate. Immersing the carrier material results in a wet impregnated carrier material. In one embodiment, the immersion of the carrier material refers to dipping of the carrier material into a bath with the impregnating dispersion comprising a resin component which comprises a polyacrylate. In another embodiment, the impregnating dispersion is dripped onto the carrier material to be impregnated. In another embodiment, the impregnating dispersion is sprayed onto the carrier material to be impregnated. Any method of applying the impregnating dispersion onto the carrier material is possible, as long as the method allows the impregnating dispersion to at least partly penetrate into the carrier material. The carrier material can be impregnated on one side or on both sides, preferably on both sides. Hence, the impregnating dispersion can be applied to one side, preferably to both sides of the carrier material.

Preferably, at least 10 g/m², in particular at least 20 g/m² and more preferably at least 30 g/m², and even more preferably at least 40 g/m² of resin component is applied to one side of the carrier material, particularly preferred to both sides of the carrier material, preferably to each side of the carrier material. Hence, if both sides are impregnated with the resin component, the carrier material comprises a total of between 20 g/m² and 80 g/m² of resin component after impregnation. The amount of resin component may depend on the paper used, in particular on the weight of the paper used. The resin component of the impregnating dispersion comprises a polyacrylate. Preferably, the resin component consists of a polyacrylate.

After impregnation, the excess impregnating dispersion, i.e. the impregnating dispersion that has not penetrated into the carrier material, can optionally be removed from the carrier material. However, removal of the impregnating dispersion is limited by the fact that sufficiently moisture is maintained in order to keep the impregnated carrier material in a wet state. The excess impregnating dispersion may be removed by various methods known to the skilled person, e.g. by running off by gravity or mechanical removal. e.g. using blades, squeezing rolls or scrapers.

"Coating" generally means that a material is brought into contact with a coating composition, i. e. a coating composition is applied to said material, so that the composition preferably remains on the surface of said material, i.e. without substantially penetrating into said material.

The coating step of the present invention is preferably performed by immersing the wet impregnated carrier material in a coating composition comprising a thermosetting resin. In one embodiment, immersion of the wet impregnated carrier material refers to dipping of the wet impregnated carrier material into a bath comprising a coating composition comprising a thermosetting resin. In another embodiment, the coating composition is dripped onto the wet impregnated carrier material. In another embodiment, the coating composition is sprayed onto the wet impregnated carrier material. Any method of applying the coating composition onto the wet impregnated carrier material is possible, as long as the method allows the coating composition to remain on the surface of the wet impregnated carrier material. The wet impregnated carrier material can be coated on one side or on both sides, preferably on both sides. Hence, the coating composition can be applied to one side, preferably to both sides of the wet impregnated carrier material.

With the coating, preferably at least 10 g/m², in particular at least 20 g/m² and more preferably at least 30 g/m² and even more preferably at least 40 g/m² of a thermosetting resin is preferably applied to one side of the wet impregnated carrier material, particularly preferred to both sides of the wet impregnated carrier material, preferably to each side of the wet impregnated carrier material. Hence, if both sides of the wet impregnated carrier material are coated with thermosetting resin, the wet impregnated and coated carrier material comprises a total of between 20 g/m² and 80 g/m² of a thermosetting resin. The amount of thermosetting resin may depend on the paper used, in particular on the weight of the paper used. Optionally, the coating step is repeated.

In a preferred embodiment, the weight ratio of resin component of step b), i. e. as applied in the impregnating step, to thermosetting resin of step c), i. e. as applied in the coating step, is from 0.4 to 1.5, preferably 0.8 to 1.0. In a particularly preferred embodiment, the weight ratio of resin component of step b) to thermosetting resin of step c) is 1.0.

In another preferred embodiment, the weight ratio of carrier material of step a), i. e. as provided, to resin component of step b), i. e. as applied in the impregnating step, to thermosetting resin of step c), i. e. as applied in the coating step, is about 1/1/1. The weight of the carrier material and the resin component and the thermosetting resin, respectively, may be measured in g/m², i. e. the weight per area, and may thus refer to the area of the carrier material to be impregnated and coated.

As described above, it is essential that the carrier material is and remains wet before the coating composition is applied. "Wet" in the sense of the present application means that at least the major part of the carrier material is not dry. In particular, "wet" means that the total content of residual volatiles in the impregnated carrier material exceeds an amount of 10 % by weight, more preferably exceeds 20 % by weight and most preferably exceeds 30 % by weight. Dry preferably means a total content of residual volatiles in the impregnated carrier material of at most 10 % by weight. Hence, a wet impregnated carrier material preferably has a total content of residual volatiles of more than 10% by weight. The skilled person is aware of and able to select suitable methods and standard tests for determining the content of residual volatiles such as solvents including organic solvents and water. For example, residual volatiles may be measured by keeping a sample in a hot oven for 5 min at 160°C and calculating the amount of volatiles lost during drying. The volatiles consist of residual moisture, hence of the residual solvents. Hence, according to the invention any drying step in between the impregnation and the coating step is preferably avoided.

The polyacrylate according to the present invention refers to a homopolymer or copolymer comprising acrylate monomers. In the sense of the present application, the terms "acrylic resin" "polyacrylate" or "acrylics" are used synonymously. Acrylate monomers are based on the structure of acrylic acid or are derivatives of acrylic acid.

For examples, acrylate monomers can refer to salts or esters of acrylic acid or are derivatives of acrylic acid. Esters of acrylic acid are, for example, alkyl acrylates, preferably C₁₋₁₀ alkyl acrylates. Preferred examples of C₁₋₁₀ alkyl acrylates are methyl acrylate, ethyl acrylate, butyl acrylate or 2-ethylhexyl acrylate. Esters of acrylic acid may also be termed "acrylic esters". Other possible ester groups are hydroxyl alkyl ester groups, preferably C₁₋₁₀ hydroxyl ester groups, or heteroalkyl ester groups, preferably C₁₋₁₀ heteroalkyl ester groups.

An acrylate monomer may also be methacrylate. Methacrylates may also be esterified resulting in, e. g., methyl methacrylate, ethyl methacrylate, butyl methacrylate or hydroxyethyl methacrylate. Esters of methacrylic acid may also be termed "methacrylic esters". Other possible ester groups are hydroxyl alkyl ester groups, preferably C₁₋₁₀ hydroxyl ester groups, or heteroalkyl ester groups, preferably C₁₋₁₀ heteroalkyl ester groups. The polymers comprising at least a methacrylate as a monomer may also be termed polymethacrylates. A homopolymer comprising methyl methacrylate as the acrylate monomer may be termed poly(methyl methacrylate) (PMMA). A homopolymer comprising methyl acrylate as the acrylate monomer may be termed poly(methyl acrylate) (PMA).

Other examples of acrylate monomers are, e. g., acrylonitrile or 2-chloroethyl vinyl ether. Trifunctional monomers, such as trimethylolpropane triacrylate (TMPTA) are also possible.

Any combinations of at least two acrylate monomers may form copolymers according to the present application. For example, a copolymer may be formed of the monomers acrylic ester and methacrylic ester. A copolymer may also be formed of an acrylate monomer and another monomer which is not an acrylate monomer. For example, a suitable copolymer may be formed of vinyl acetate and an acrylate monomer. Another suitable copolymer may be formed of styrene and an acrylate monomer. Preferably, a copolymer is formed of acrylic ester and methacrylic ester.

The polyacrylates or their monomeric components may have at least one functional group selected from the group consisting of carboxylate groups, carboxamide groups, amino groups or hydroxyl groups. They may also have no functional groups at all. Functional groups may be neutralized by defunctionalisation, for example by ether groups, (di)alkylamido groups or ester groups, preferably by ester groups.

In a preferred embodiment, the polyacrylate is a copolymer comprising and more preferably consisting of acrylic and methacrylic esters as acrylate monomers.

One particularly preferred polyacrylate is contained within CHP 619 (CH Polymers, Finland), which is a self-cross-linking polymeric dispersion based on acrylic and methacrylic esters, and which comprises 45 % ± 1 % acrylates as components suitable and intended to form a resin. This specific polyacrylate is particularly alkaline and moisture resistant.

In a preferred embodiment, the impregnating dispersion comprises the polyacrylate contained in CHP 619 in an amount of at least 50 % by weight, preferably at least 60 % by weight and more preferably at least 98 % by weight based on the weight of the resin component.

The impregnating dispersion may additionally comprise a further resin, preferably at least one thermosetting resin. Hence in certain embodiments the impregnating dispersion comprises the polyacrylate and at least a thermosetting resin as resin component.

The term "resin", as used according to the present invention, is a generic term for synthetic substances that can be or are cured or hardened. Unless otherwise explicitly mentioned hereinafter the term "resin" is understood as "synthetic resin". Accordingly the terms "resin" and "synthetic resin" are used as synonyms in the context of the invention. Unless otherwise explicitly indicated this term also encompasses "unmodified or modified resins", thermoplastic resins and thermosetting resins. A "thermosetting resin" is usually defined as a substance or composition that changes irreversibly into an infusible, insoluble polymer network by curing. In contrast, thermoplastics are usually defined as plastic materials, typically polymers that become pliable or mouldable above a specific temperature and solidify upon cooling.

Thermosetting resins include formaldehyde-based resins, acetal resins, polyester resins, vinylesters or epoxy resins. The thermosetting resin may be an unmodified or a modified resin. For example the melamine-formaldehyde resin may be modified e.g. by glycol, caprolactam, acetoguanamine, benzoguanamine or p-toluene-sulphonamide, by alkylation or etherification. The thermosetting resin is preferably a formaldehyde-based resin.

The thermosetting resin is selected from the group consisting of phenol-formaldehyde (PF)-resin, melamine-formaldehyde (MF)-resin, urea-formaldehyde (UF)-resin, phenol-resorcinol-formaldehyde (PRF), melamine-urea-formaldehyde (MUF)-resin, MF-PF blend, PF-UF blend, MU-PF blend and mixtures thereof. The term "mixtures thereof" means that the impregnating dispersion may comprise more than one, i.e. different thermosetting resins. In a most preferred embodiment, the thermosetting resin in the impregnating dispersion is a PF-resin or an MF-resin or a mixture thereof. In a particularly preferred embodiment, the thermosetting resin in the impregnating dispersion is a PF-resin.

The PF-resin may be modified e.g. by urea, melamine, lignin, resorcinol, modified phenol, cresol, bisphenol or other equivalent compound. Any amino and phenolic resins known *per* se may be used for the formaldehyde-based resins. By combining different types of resins, e.g. phenolic and amino resins, in a suitable ratio, it is possible to further improve and optimize the properties of the resin and resin component, respectively.

The resin component in the impregnating dispersion preferably comprises and in one embodiment consists of the polyacrylate and a thermosetting resin. The resin component comprises at least 60 % by weight and even more preferred at least 70 % by weight, more preferred at least 80 % by weight and further preferred at least 95 % by weight or at least 98 % by weight of the polyacrylate based on the weight of the resin component. In embodiments in which a thermosetting resin is present within the impregnating dispersion, the amount of thermosetting resin may be at least 20 % by weight based on the weight of the resin component.

In a preferred embodiment, the resin component comprises the polyacrylate in an amount of at least 60 % and the thermosetting resin in an amount of at least 20 % by weight based on the weight of the resin component.

The amount of resin component in the impregnating dispersion amounts to at least 30 % by weight, more preferably 35 % by weight and especially preferably more than 40 % by weight, in particular more than 43 % by weight based on the weight of the impregnating dispersion.

In a particularly preferred embodiment, the impregnating dispersion comprises the polyacrylate of CHP 619 and no thermosetting resin, meaning that the resin component consists of the polyacrylate of CHP 619.

As outlined above according to the invention the wet impregnated carrier material is coated with a coating composition comprising a thermosetting resin. The thermosetting resin is selected from the resins already described with regard to the thermosetting resin which may be present in the impregnating dispersion. The thermosetting resin in the coating composition is preferably a PF-resin or an MF-resin or a mixture thereof. In a particularly preferred embodiment, the thermosetting resin in the coating composition is a PF-resin.

The thermosetting resin in the coating composition can be the same or different from the one which is optionally contained in the impregnating dispersion. Preferably, the impregnating dispersion comprises the same thermosetting resin as the coating composition. Namely, it is preferred that the thermosetting resin in both - the impregnating dispersion and in the coating composition - is a PF-resin or an MF-resin or a mixture thereof. In a particularly preferred embodiment, the thermosetting resin in the impregnating dispersion and in the coating composition is a PF-resin.

The coating composition comprises a thermosetting resin, which is preferably the only resin present in the coating composition. The coating composition preferably comprises the thermosetting resin in an amount of at least 40 % by weight, more preferably at least 45 % by weight, more preferably at least 50 % by weight based on the weight of the coating composition. In a preferred embodiment, the coating composition comprises the thermosetting resin in an amount of at least 52 % by weight based on the weight of the coating composition. The coating composition can comprise a solvent and further additives. Hence, additives as mentioned with regard to the impregnating dispersion may be present in the coating composition, as well. The skilled person is aware and able to select suitable solvents in view of the thermosetting resin used in the coating composition. Possible solvents are, for example, water, alcohols, in particular glycols, esters, in particular ethyl acetate, alkanes, in particular heptanes or hexanes, in particular n-heptane, acetones, in particular acetylacetone, aromats, in particular toluene or xylene, and mixtures thereof. In a preferred embodiment, the solvent comprises water. A solvent comprising water is cost efficient and environmentally beneficial due to reduced VOC (volatile organic compound) emission compared with organic solvents as such. In another preferred embodiment, the solvent in the coating composition consists of water.

In one embodiment, the method is performed with an impregnating dispersion comprising a resin component which comprises a polyacrylate, wherein the polyacryate comprises acrylic and methacrylic esters as monomers, and with a coating composition comprising a thermosetting resin, wherein the thermosetting resin comprises a PF-resin.

In another embodiment, the method is performed with an impregnating dispersion comprising a resin component which comprises a polyacrylate, wherein the polyacryate comprises acrylic and methacrylic esters as monomers, and with a coating composition comprising a thermosetting resin, wherein the thermosetting resin comprises an MF-resin.

In yet another embodiment, the method is performed with an impregnating dispersion comprising as resin component a polyacrylate and a thermosetting resin, wherein the polyacryate comprises acrylic and methacrylic esters as monomers and the thermosetting resin in the impregnating dispersion comprises a PF-resin, and with a coating composition comprising a thermosetting resin, wherein the thermosetting resin in the coating composition comprises a PF-resin.

In yet another embodiment, the method is performed with an impregnating dispersion comprising as resin component a polyacrylate and a thermosetting resin, wherein the polyacryate comprises acrylic and methacrylic esters as monomers and the thermosetting resin in the impregnating dispersion comprises a PF-resin, and with a coating composition comprising a thermosetting resin, wherein the thermosetting resin in the coating composition comprises an MF-resin.

In yet another embodiment, the method is performed with an impregnating dispersion comprising as resin component a polyacrylate and a thermosetting resin, wherein the polyacryate comprises acrylic and methacrylic esters as monomers and the thermosetting resin in the impregnating dispersion comprises an MF-resin, and with a coating composition comprising a thermosetting resin, wherein the thermosetting resin in the coating composition comprises a PF-resin.

In yet another embodiment, the method is performed with an impregnating dispersion comprising as resin component a polyacrylate and a thermosetting resin, wherein the polyacryate comprises acrylic and methacrylic esters as monomers and the thermosetting resin in the impregnating dispersion comprises an MF-resin, and with a coating composition comprising a thermosetting resin, wherein the thermosetting resin in the coating composition comprises an MF-resin.

In a preferred embodiment, the method is performed with an impregnating dispersion comprising a resin component which comprises a polyacrylate in an amount of at least 98 % by weight based on the weight of the resin component, wherein the polyacryate comprises acrylic and methacrylic esters as monomers, and with a coating composition comprising a thermosetting resin in an amount of at least 50 % by weight based on the weight of the coating composition, wherein the thermosetting resin comprises a PF-resin.

After coating, a possible further step is drying. The term "drying" generally means that moisture is removed from an item to be dried. Drying can be achieved at ambient temperature if the atmospheric moisture is low enough. Drying may also be achieved by the application of heat.

By drying the film, i. e. drying the coated impregnated carrier material, the impregnating dispersion comprising a resin component which comprises a polyacrylate dries and the coating composition comprising a thermosetting resin dries and cures to a desired degree of polymerization.

Drying of the film in the sense of the present application, i. e. of the impregnated and coated carrier material, refers to the treatment of the wet impregnated and coated carrier material with heat at a temperature of at least 60°C, more preferably of at least 70°C, or preferably at least 100°C for at least 3 min, preferably for at least 5 min, more preferably for at least 10 min. In case of a PF-resin, MF-resin or PF/MF-resin in the impregnating dispersion and/or in the coating composition, the temperature is preferably of from 100°C to 200°C.

After drying, the residual volatiles content of the film is preferably at most 10 % by weight, preferably less than 10 % by weight, more preferably less than 9 % by weight, even more preferred less than 8 % by weight, even more preferred less than 6 % by weight. Methods for determining the content of residual volatiles have been mentioned *supra.*

The impregnating dispersion may further comprise a dye, such as an organic polycyclic dye, organic monoazo dye, organic diazo dye, organometal complex(es) or an inorganic pigment such as metal oxide or complex.

Dyes can also be perinone, anthraquinone, azo dye complexes and thioindigoid.

In a preferred embodiment of the invention the dye in the impregnating dispersion is selected from the group consisting of Acid Yellow 23, Acid Red 18, Acid Yellow 36, Acid Black 194, Direct Red 239, Reactive Red 120, Acid Blue 9, Acid Red 27, Acid Red 51, Direct Blue 199, Direct Red 254, Reactive Red 195, Acid Red 14, Acid Yellow 17, Acid Black 1, Direct Yellow 86, Direct Black 168, Food Black 2 and mixtures thereof.

In a most preferred embodiment the dye in the impregnating dispersion is Acid Black 2 and/or Direct Red 254.

The impregnating dispersion may comprise a dye in a concentration of about 0.01 % to about 5 % by weight, more preferably of about 0.02 % to about 3 % by weight, and most preferably, of about 1 % by weight based on the weight of the impregnating dispersion. A preferred dosage for Direct Red 254 is about 0.3 % by weight and for Acid Black 2 about 0.8 % by weight. Possible and preferred dyes have been mentioned *supra.*

The coating composition comprising a thermosetting resin may further comprise a release agent. A release agent prevents materials from bonding to other materials. In preferred embodiments, the coating composition comprises a release agent.

The skilled person is able to select suitable release agents in suitable amounts. Preferably, the release agents are added to the coating composition in a concentration of between 0.1 % to 1.5 % by weight, preferably of between 0.3 % to 1 % by weight, more preferably of about 0.6 % by weight based on the weight of the coating composition. In the present invention, the release agent serves the purpose of further helping to prevent the manufactured film from sticking to the hot press plate. Processing can thus be further facilitated.

A "carrier material" is any material that can be impregnated with the impregnating dispersion and further be coated with the coating composition. The carrier material usually comprises one side and an opposite side, in other words an upper side and a lower side usually as an upper surface and a lower surface. Upper surface and lower surface always refer to opposite sides of the carrier material. Preferably, a carrier material as used in the present invention constitutes a carrier layer, i.a. a carrier material in a sheet like form with an upper and lower surface.

The carrier material is selected from the group consisting of paper, in particular kraft paper or sack paper, card board, glass fibre and textiles including woven and non-woven fabrics. Hence, a carrier material according to the present invention may consist of or comprise a material which is selected from the group consisting of paper, kraft paper, sack paper, glass fibre, card board and textile fabrics including woven and non-woven fabrics. The carrier material is preferably a paper.

As used herein the term "paper" is defined as a material mainly constituted of fibres, in particular derived from plants, in particular wood or grasses, or textiles. The paper preferably is kraft paper. According to the invention the paper preferably has a weight per unit area of between 40 g/m² and 250 g/m².

In a preferred embodiment the paper has a weight per unit area between 20 g/m² and 150 g/m², more preferably between 30 g/m² and 90 g/m² In a preferred embodiment, the paper has a weight per unit area of 40 g/m². In another preferred embodiment, the paper has a weight per unit area of 80 g/m².

In one embodiment, the paper has a weight per unit area of 40 g/m², the paper impregnated with the impregnating dispersion comprising a resin component which comprises a polyacrylate (optionally also comprising a thermosetting resin) has a weight per unit area of between 65 g/m² and 95 g/m² (after drying) and the impregnated paper coated with the coating composition comprising a thermosetting resin has a weight per unit area of between 100 g/m² and 130 g/m² (after drying).

In one embodiment, the paper has a weight per unit area of 80 g/m², the paper impregnated with the impregnating dispersion comprising a resin component which comprises a polyacrylate (optionally also comprising a thermosetting resin) has a weight per unit area of between 130 g/m² and 170 g/m² (after drying) and the impregnated paper coated with the coating composition comprising a thermosetting resin has a weight per unit area of between 200 g/m² and 260 g/m² (after drying).

The film manufactured according to the present invention may have a weight of between 100 g/m² and 250 g/m², preferably of between 110 g/m² and 230 g/m².

A method of overlaying a wood-based material with a film is provided comprising the following steps:
a) providing a film prepared by the inventive method,
b) drying the film,
c) applying the film to a panel, preferably a wood-based material, by means of heat and pressure, preferably by hot-pressing.

A panel is a solid substrate onto which the film can be applied. The panel can be a wood-based material. A wood-based material is a material based on wood, which means that the main component of said material is wood. The main component means that more than 40 % by weight, preferably more than 50 % by weight, even more preferred more than 60 % by weight relating to the weight of the wood-based material is formed by wood.

The wood-based material of the present invention includes a wood-based veneer including a veneer sheet or a wood composite, wood, plywood, chip-board, fibre board, oriented strand board (OSB), glue wood, laminated veneer lumber (LVL), parallel strand lumber (PSL), oriented strand lumber (OSL), 3-layer boards or the like.

In one embodiment, the plywood is softwood plywood, in particular spruce plywood. Softwood is wood from gymnosperm trees such as conifers.

In another embodiment, the plywood is hardwood plywood, in particular birch plywood. Hardwood is wood from angiosperm trees, which are usually deciduous.

Within the present invention, the term "veneer" is defined as a layer with a thickness of usually not more than 2 cm or less, preferably 1.5 cm or less, more preferably 1 cm or less, more preferred less than 0.6 cm. Typically, the veneer has a minimal thickness of 0.1 cm. However veneers with a thickness of about 0.1 mm exist. A veneer can be of any material, in particular of wood, paper, metal or plastic. Most preferred the veneer is a wood-based veneer.

By means of heat and pressure preferably refers to hot pressing or application of a a hot roller, most preferably to hot pressing. The term "hot-pressing" is well known to the skilled person in the art and generally refers to the concomitant application of heat and pressure.

According to the present invention, hot-pressing preferably refers to the concomitant application of pressures between 3 kg/cm² and 35 kg/cm², preferably of between 5 kg/cm² and 25 kg/cm², more preferably of between 7 kg/cm² and 22 kg/cm², even more preferably of between 9 kg/cm² and 20 kg/cm², along with temperatures of between 90°C and 400°C, preferably of between 100°C and 200°C, more preferably of between 110°C and 180°C, even more preferably of between 120°C and 150°C. Temperature and pressure are preferably applied for 1 minute to 20 minutes, more preferably for 2 minutes to 15 minutes and more preferably for 4 minutes to 10 minutes, even more preferably for 5 minutes to 6 minutes. In case the time period is too short, adhesion may be insufficient. Too long processing may be accompanied by increased production costs and energy consumption. The same is true in case temperatures and pressures are used, which are too high.

One particularly preferred temperature applied for hot-pressing is 135°C.

In one embodiment, for hot-pressing pressure of between 5 kg/cm² and 25 kg/cm² and temperatures of between 100 and 200 °C are concomitantly applied for 1 to 20 minutes.

In another embodiment, for hot pressing pressure of between 7 kg/cm² and 22 kg/cm² and temperatures of between 110 and 180 °C are concomitantly applied for 2 to 15 minutes.

In one preferred embodiment, a pressure of 18 kg/cm² is applied at a temperature of 135 °C for about 6 minutes. In another preferred embodiment, a pressure of 18 kg/cm² is applied at a temperature of 130 °C for about 5.5 minutes.

Hence a specific embodiment according to the invention is providing a kraft paper having a weight per unit area of 30 g/m² to 90 g/m², preferably 40 g/m² or 80 g/m², impregnating the paper with in impregnating dispersion comprising a resin component with at least 98 % by weight of the polyacrylate and an amount of resin component of at least 40% by weight based on the impregnating dispersion resulting in a wet impregnated paper, coating the wet impregnated paper with a coating composition comprising at least 50 % by weight of PF-resin based on the amount of coating composition, drying the wet impregnated and coated paper, resulting in a film and applying the film to plywood as the panel at a temperature of between 120°C and 150°C, preferably at 135°C, a pressure between 9 kg/cm² and 20 kg/cm², preferably at 18 kg/cm², for 4 to 8 minutes, preferably for about 6 minutes.

Preferably, the film is applied to the panel, such that the surface of the film with the coating is directed to, most preferably is in contact with the panel.

A layered material prepared by the method of overlaying a panel, preferably a wood-based material, with a film is also provided. Said layered material may comprise additional layers or any other materials, such as an additional panel and/or an additional film.

In one embodiment of the invention, the layered material comprises or preferably consists of:
a) a wood-based material;
b) a film manufactured according to the invention overlaying the wood-based material.

A wood product comprising the layered material is also provided. According to the invention the term "wood product" generally refers to any product formed comprising wood or wood-based materials.

In one embodiment, the term "wood product" refers to a product obtained by manufacturing a film according to the invention and overlaying a wood-based material with said film.

Further embodiments according to the present invention are described below:
1. Method of manufacturing a film for overlaying a panel, in particular a wood-based material, comprising the steps
   a) providing a carrier material, wherein the carrier material is a material which is selected from the group consisting of paper, glass fibre, card board and textile fabrics including woven and non-woven fabrics,
   b) impregnating the carrier material with an impregnating dispersion comprising a resin component which comprises a polyacrylate resulting in an impregnated carrier material having a total content of residual volatiles of more than 10% by weight, wherein the impregnating dispersion comprises the resin component in an amount of at least 30 % by weight based on the weight of the impregnating dispersion, wherein the resin component i) consists of the polyacrylate or ii) comprises the polyacrylate and a further thermosetting resin, being selected from the group consisting of phenol-formaldehyde (PF)-resin, melamine-formaldehyde (MF)-resin, urea-formaldehyde (UF)-resin, phenol-resorcinol-formaldehyde (PRF), melamine-urea-formaldehyde (MUF)-resin, MF-PF blend, PF-UF blend, MU-PF blend and mixtures thereof, wherein the resin component comprises the polyacrylate in an amount of at least 60 % and the thermosetting resin in an amount of at least 20% by weight based on the weight of the resin component,
   c) coating the impregnated carrier material with a coating composition comprising a thermosetting resin, wherein the thermosetting resin in step c) is selected from the group consisting of phenol-formaldehyde (PF)-resin, melamine-formaldehyde (MF)-resin, urea-formaldehyde (UF)-resin, phenol-resorcinol-formaldehyde (PRF), melamine-urea-formaldehyde (MUF)-resin, MF-PF blend, PF-UF blend, MU-PF blend and mixtures thereof.
2. The method according to embodiment 1, wherein the impregnating dispersion comprises the resin component in an amount of preferably at least 40 % by weight based on the weight of the impregnating dispersion.
3. The method according to any of embodiments 1 to 2, wherein the weight ratio of resin component of step b) to thermosetting resin of step c) is from 0.4 to 1.5, preferably 0.8 to 1.0.
4. The method according to any of embodiments 1 to 3, wherein the weight ratio of carrier material of step a) to resin component of step b) to thermosetting resin of step c) is about 1/1/1.
5. The method according to any of embodiments 1 to 4, wherein the polyacrylate comprises acrylic and methacrylic esters as monomers.
6. The method according to any of embodiments 1 to 5, wherein the resin component consists of the polyacrylate and the thermosetting resin.
7. The method according to any of embodiments 1 or 6, wherein the thermosetting resin is a PF-resin or an MF-resin or a mixture thereof.
8. The method according to any of embodiments 1 to 7, wherein the coating composition comprises the thermosetting resin in an amount of at least 45 % by weight, preferably at least 50 % by weight based on the weight of the coating composition.
9. The method according to any of embodiments 1 to 8, wherein the carrier material is paper, preferably kraft paper.
10. The method according to any of embodiments 1 to 9, further comprising a step of drying subsequently to step c).
11. Film prepared by the method according to any of embodiments 1 to 10.
12. Use of the film according to embodiment 11 for overlaying a panel, in particular a wood-based material.
13. Method of overlaying a panel, preferably a wood-based material, with a film comprising the following steps:
   a) providing a film prepared by the method according to embodiment 11,
   b) applying the film to the panel by means of heat and pressure, preferably by hot-pressing.
14. The method according to embodiment 13, wherein step b) is performed at a temperature of between 110°C and 180°C, preferably of between 120°C and 150°C, and a pressure of between 7 kg/cm² and 22 kg/cm², preferably of between 9 kg/cm² and 20 kg/cm², for 2 to 15 minutes, preferably for 4 to 10 minutes.
15. The method according to embodiment 13 or 14, wherein step b) is performed at a temperature of 135°C, and a pressure of 18 kg/cm², for about 6 minutes.
16. Method of overlaying a panel, preferably a wood-based material, with a film comprising the following steps:
   a) providing a kraft paper having a weight per unit area of 30 to 90 g/m², preferably 40 g/m² or 80 g/m²,
   b) impregnating the paper with an impregnating dispersion comprising at least 40 % by weight of a resin component, wherein the resin component comprises a polyacrylate in an amount of at least 98 % by weight based on the weight of resin component, which results in an impregnated paper having a total content of residual volatiles of more than 10% by weight,
   c) coating the impregnated paper with a coating composition comprising at least 50 % by weight of PF-resin based on the weight of the coating composition.
   d) drying the impregnated and coated paper, resulting in a film for overlaying a panel, preferably a wood-based material, more preferably plywood
   e) applying the film to the panel at a temperature of between 120°C and 150°C, preferably at 135°C, a pressure between 9 kg/cm² and 20 kg/cm², preferably at 18 kg/cm², for 4 to 8 minutes, preferably for about 6 minutes.
17. Layered material prepared by the method according to any of embodiments 13 to 16.
18. The layered material according to embodiment 17, wherein a ratio of a minimum bending radius of the layered material according to embodiment 17 and the same panel overlaid with a paper impregnated with a phenolic resin is less than 0.8, preferably less than 0.7, even more preferably less than 0.6.
19. The layered material according to embodiment 17 or 18, wherein a ratio of a minimum bending radius of the layered material according to embodiment 17 or 18 and the same panel overlaid with a paper impregnated with a phenolic resin is less than 0.5.
20. Wood product comprising the layered material of any of embodiments 17 to 19.

### EXAMPLES

### Example 1: Preparation of layered materials according to the invention and bending results

### 1.1 Objective

The objective was to test the bending ability of four different panels.

First, different films were prepared by impregnating kraft paper with an impregnating dispersion comprising a resin component which comprises a polyacrylate which is the acrylic resin of CHP 619 from CH Polymers, Finland (Mix 1) or a mixture of said acrylic resin and a PF-resin (internal designation S-7967 by Hexion) (Mix 2) as defined in Table 1. The mixtures further comprise Acid Black 2 as a black dye and Direct Red 254 as a red dye. The impregnation step was performed by dipping the kraft paper into a bath comprising the impregnating dispersion. Excess impregnating dispersion was removed by using scrapers.

**Table 1: Dispersions (Mix 1 and Mix 2) for impregnating kraft paper**

| **Component** | **Mix 1, parts by weight** | **Mix 2, parts by weight** |
|---|---|---|
| Acrylic resin (45%) | 400 | 400 |
| PF-resin (55%) | 0 | 160 |
| Black dye | 3.5 | 5 |
| Red dve | 1.4 | 2 |

After impregnation, the paper was coated with a coating composition comprising PF-resin in an amount of about 55 % by weight based on the weight of the coating composition. Coating was performed by dipping the wet impregnated paper into a bath comprising the coating composition comprising the PF-resin. Excess coating composition was removed by using squeezing rolls. The same PF-resin was used in the coating composition as in the impregnating dispersion. The coating composition further comprised 0.6 % by weight release agent.

**Table 2: Prepared samples**

| **Sample** | **Paper, g/m²** | **Impregnation** | **Weight after impregnation, g/m²** * | **Weight after coating, g/m² **** | **Residual volatiles, %** |
|---|---|---|---|---|---|
| 1 | 40 | Mix 1 | 80 | 119 | 5,3 |
| 2 | 40 | Mix 2 | 80 | 122 | 6,5 |
| 3 | 80 | Mix 1 | 153 | 220 | 5,7 |
| 4 | 80 | Mix 2 | 154 | 218 | 7,0 |

| | | | | | |
|---|---|---|---|---|---|
| * Weight after impregnation and drying, ** Weight after coating and drying | | | | | |

After impregnation and coating, the paper was dried to a residual volatile level of approximately 6 %. Exact measured values are given in Table 2. Residual volatiles are measured by keeping the sample in a hot oven for 5 min at 160°C and calculating the amount of volatile material lost during drying.

Second, the manufactured films were pressed with a hot press onto plywood under the following conditions:
birch 21 mm: 18 kg/cm² for 6 min at 135°C.

### 1.2 Test Setup

Flexibility of the sample was tested when the sample is bent. Flexibility is tested by bending sample of panel (40 x 10 cm, 10 cm in grain direction of surface veneer) to a given radius of press jigs. More flexible panels can be pressed to a smaller radius jig.

### 1.3 Results of Tests

**Table 3: Bending test results (average of two samples).**

| **Sample** | **Paper, g/m²** | **Impregnation** | **Minimum bending radius, mm** |
|---|---|---|---|
| 1 | 40 | Mix 1 | < 993 |
| 2 | 40 | Mix 2 | < 1278 |
| 3 | 80 | Mix 1 | < 800 |
| 4 | 80 | Mix 2 | < 1365 |

Typically, the minimum bending radius for a 21 mm birch plywood overlaid with a paper (80 g/m²) impregnated with phenolic resin (140 g/m²; total weight 220 g/m²; no further coating) is < 1775 mm. The results clearly show that the minimum bending radius is further reduced when the paper is impregnated with an impregnating dispersion comprising a higher amount of acrylate (Mix 1). Results also show that when the impregnating dispersion also comprises a PF-resin (Mix 2), improvement is reduced compared with Mix 1 but is still measurable compared with the typical minimum bending radius.

The same test results were obtained with MF-resin instead of PF-resin. The acrylate layer (obtained by impregnating the paper with an impregnating dispersion comprising a resin component which comprises a polyacrylate) and the MF-resin layer (obtained by coating the impregnated paper with a coating composition comprising MF-resin) were compatible.

The same results were also obtained by replacing kraft paper with a non-woven substrate (40 g/m², 60 g/m² and 80 g/m²).

Samples prepared with 40 g/m² and 80 g/m² kraft paper were also tested for several other properties (boiling, adhesion, cyclic cracking test, evaluation of bleeding, moisture resistance) and pressed on birch and spruce plywood. Good results were seen with regard to all these features in case of layered materials produced according to the invention.

### Example 2: Appearance and surface properties of layered materials manufactured according to the invention

### 2.1 Objective

The objective was to visually evaluate the overlaid panels and to test their surface properties, such as performance after concrete pours and cracking.

Panels (12 mm spruce) which were sanded asymmetrically (the top side was sanded more and the bottom side was sanded lightly and only partly) were provided and a film (120 g/m²) was applied to the panel in a press plate. The film was prepared according to Sample 1 in Table 2. Pressing conditions were:
18 kg/cm² peak pressure for 5.5 min at 130°C.

### 2.2 Test Setup

The appearance was evaluated visually. The performance of the layered materials after concrete pours and cracking was tested with the concrete test and the cracking test, respectively, as explained below.

### Concrete test:

Cement is an alkaline material which etches surface structures if alkaline resistance or cure level is not sufficient.

Concrete test is carried out by mixing neat cement (standard Portland cement) with water so that consistent paste is formed. Cement paste is poured into a plastic cup and placed onto the surface structure, i.e. the overlaid panels, to be studied. Cement paste is allowed to dry for three days and removed. When removing the cement cake, the following properties are evaluated: sticking of cement onto the surface of the overlaid panel, possible change in surface structure because of cement (swelling, cracking, color change).

### Cracking test:

For this test, an additional film is applied to layered material as outermost layer, i. e. both sides of the panel are overlaid with the same film, to avoid warping of samples during testing. The resulting samples are cut to size of 100 mm x 100 mm and edges are sanded in order to remove possible cracks caused by machining tools. Minimum of three replicates are prepared.

The cracking test is a cyclic test consisting of following cycles:
- Water soak (20°C) for 8 hours; and
- Drying and heat treatment in hot (70°C) oven for 16 hours.

After heat treatment samples are allowed to cool at room temperature. Cracking (number of cracks, length of cracks) is evaluated after cooling. Test cycles are repeated as many times as needed to determine cracking tendency, i.e. cracking will not take place, layered material surface (surface without additional coating) is completely cracked or difference between test material and known reference is seen.

### 2.3 Results of Tests

The top side of the layered materials was smooth. The bottom side of the panel was relatively rough due to minimal sanding but had a good appearance. Bonding on puttied spots was good.

No tendency of cracking was noted at the ends of the layered materials right after pressing. After two cycles of the cracking test, no cracking was observed either. Thus, compared with softwood overlaid with a paper (40 g/m²) impregnated with phenolic resin (80 g/m²; total weight 120 g/m²; no further coating), softwood overlaid with a film according to the present invention showed good cracking resistance even though softwood plywood (spruce) has been used.

The layered materials showed no sticking of concrete/cement, no excess swelling and no degradation of surface by alkaline after two concrete pours.

## Claims

1. A method of manufacturing a film for overlaying a panel, in particular a wood-based material, comprising the steps
a) providing a carrier material, wherein the carrier material is a material which is selected from the group consisting of paper, glass fibre, card board and textile fabrics including woven and non-woven fabrics,
b) impregnating the carrier material with an impregnating dispersion comprising a resin component which comprises a polyacrylate resulting in a wet impregnated carrier material, wherein the impregnating dispersion comprises the resin component in an amount of at least 30 % by weight based on the weight of the impregnating dispersion, wherein the resin component i) consists of the polyacrylate or ii) comprises the polyacrylate and a further thermosetting resin, being selected from the group consisting of phenol-formaldehyde (PF)-resin, melamine-formaldehyde (MF)-resin, urea-formaldehyde (UF)-resin, phenol-resorcinol-formaldehyde (PRF), melamine-urea-formaldehyde (MUF)-resin, MF-PF blend, PF-UF blend, MU-PF blend and mixtures thereof, wherein the resin component comprises the polyacrylate in an amount of at least 60 % and the thermosetting resin in an amount of at least 20% by weight based on the weight of the resin component and, wherein the wet impregnated carrier material has a total content of residual volatiles of more than 10% by weight, wherein the total content of residual volatiles is measured by keeping a sample in a hot oven for 5 min at 160°C and calculating the amount of volatiles lost during drying,
c) coating the wet impregnated carrier material with a coating composition comprising a thermosetting resin, wherein the thermosetting resin in step c) is selected from the group consisting of phenol-formaldehyde (PF)-resin, melamine-formaldehyde (MF)-resin, urea-formaldehyde (UF)-resin, phenol-resorcinol-formaldehyde (PRF), melamine-urea-formaldehyde (MUF)-resin, MF-PF blend, PF-UF blend, MU-PF blend and mixtures thereof.

2. The method according to claim 1, wherein the impregnating dispersion comprises the resin component in an amount of at least 40 % by weight based on the weight of the impregnating dispersion.

3. The method according to any of the preceding claims, wherein the weight ratio of resin component of step b) to thermosetting resin of step c) is from 0.4 to 1.5, preferably 0.8 to 1.0.

4. The method according to any of the preceding claims, wherein the weight ratio of carrier material of step a) to resin component of step b) to thermosetting resin of step c) is about 1/1/1.

5. The method according to any of the preceding claims, wherein the polyacrylate comprises acrylic and methacrylic esters as monomers.

6. The method according to any of the preceding claims, wherein the resin component consists of the polyacrylate and the thermosetting resin.

7. The method according to any of the preceding claims, wherein the thermosetting resin is a PF-resin or an MF-resin or a mixture thereof.

8. The method according to any of the preceding claims, wherein the coating composition comprises the thermosetting resin in an amount of at least 45 % by weight, preferably at least 50 % by weight based on the weight of the coating composition.

9. The method according to any of the preceding claims, wherein the carrier material is paper, preferably kraft paper or sack paper.

10. The method according to any of the preceding claims, further comprising a step of drying subsequently to step c).

11. A film prepared by the method according to any of the preceding claims.

12. Use of the film according to claim 11 for overlaying a panel, in particular a wood-based material.

13. A method of overlaying a panel, preferably a wood-based material, with a film comprising the following steps:
a) providing a film prepared by the method according to claim 11,
b) applying the film to the panel by means of heat and pressure, preferably by hot-pressing.

14. The method according to claim 13, wherein step b) is performed at a temperature of between 110°C and 180°C, preferably of between 120°C and 150°C, and a pressure of between 7 kg/cm² and 22 kg/cm², preferably of between 9 kg/cm2 and 20 kg/cm², for 2 to 15 minutes, preferably for 4 to 10 minutes.

15. The method according to claim 13 or 14, wherein step b) is performed at a temperature of 135°C, and a pressure of 18 kg/cm², for about 6 minutes.

16. The method according to any of claims 13 to 15, which comprises the following steps:
a) providing a kraft paper having a weight per unit area of 30 to 90 g/m², preferably 40 g/m² or 80 g/m²,
b) impregnating the paper with an impregnating dispersion comprising at least 40 % by weight of a resin component, wherein the resin component comprises a polyacrylate in an amount of at least 98 % by weight based on the weight of resin component, which results in a wet impregnated paper,
c) coating the wet impregnated paper with a coating composition comprising at least 50 % by weight of PF-resin based on the weight of the coating composition.
d) drying the wet impregnated and coated paper, resulting in a film for overlaying a panel, preferably a wood-based material, more preferably plywood
e) applying the film to the panel at a temperature of between 120°C and 150°C, preferably at 135°C, a pressure between 9 kg/cm² and 20 kg/cm², preferably at 18 kg/cm², for 4 to 8 minutes, preferably for about 6 minutes.

17. A layered material prepared by the method according to any of claims 13 to 16.

18. The layered material according to claim 17, wherein a ratio of a minimum bending radius of the layered material according to claim 17 and the same panel overlaid with a paper impregnated with a phenolic resin is less than 0.8, preferably less than 0.7, even more preferably less than 0.6.

19. The layered material according to claim 17 or 18, wherein a ratio of a minimum bending radius of the layered material according to claim 17 or 18 and the same panel overlaid with a paper impregnated with a phenolic resin is less than 0.5.

20. A wood product comprising the layered material of any of claims 17 to 19.

## Patentansprüche

1. Verfahren zur Fertigung einer Folie zum Überziehen eines Paneels, insbesondere eines Materials auf Holzbasis, umfassend die Schritte:
a) Bereitstellen eines Trägermaterials, wobei das Trägermaterial ein Material ist, das ausgewählt ist aus der Gruppe bestehend aus Papier, Glasfaser, Pappe und Textilstoffen einschließlich Web- und Vliesstoffen,
b) Imprägnieren des Trägermaterials mit einer Imprägnierdispersion, die eine Harzkomponente umfasst, die ein Polyacrylat umfasst, was zu einem nassimprägnierten Trägermaterial führt, wobei die Imprägnierdispersion die Harzkomponente in einer Menge von mindestens 30 Gew.% umfasst, bezogen auf das Gewicht der Imprägnierdispersion, wobei die Harzkomponente i) aus dem Polyacrylat besteht, oder ii) das Polyacrylat und ein weiteres duroplastisches Harz umfasst, das ausgewählt ist aus der Gruppe bestehend aus Phenol-Formaldehyd (PF)-Harz, Melamin-Formaldehyd (MF)-Harz, Harnstoff-Formaldehyd (UF)-Harz, Phenol-Resorcin-Formaldehyd (PRF), Melamin-Harnstoff-Formaldehyd (MUF)-Harz, MF-PF-Gemisch, PF-UF-Gemisch, MU-PF Gemisch und Mischungen davon, wobei die Harzkomponente das Polyacrylat in einer Menge von mindestens 60 Gew.% und das duroplastische Harz in einer Menge von mindestens 20 Gew.% umfasst, bezogen auf das Gewicht der Harzkomponente, und wobei das nassimprägnierte Trägermaterial einen Gesamtgehalt an restlichen flüchtigen Materialien von mehr als 10 Gew.% aufweist, wobei der Gesamtgehalt an restlichen flüchtigen Materialien gemessen wird, indem eine Probe 5 Minuten lang in einem heißen Ofen auf 160 °C gehalten wird und die Menge des Verlustes an flüchtigem Material während des Trocknens berechnet wird,
c) Beschichten des nassimprägnierten Trägermaterials mit einer Beschichtungszusammensetzung, die ein duroplastisches Harz umfasst, wobei das duroplastische Harz in Schritt c) ausgewählt ist aus der Gruppe bestehend aus Phenol-Formaldehyd (PF)-Harz, Melamin-Formaldehyd (MF)-Harz, Harnstoff-Formaldehyd (UF)-Harz, Phenol-Resorcin-Formaldehyd (PRF), Melamin-Harnstoff-Formaldehyd (MUF)-Harz, MF-PF-Gemisch, PF-UF-Gemisch, MU-PF-Gemisch und Mischungen davon.

2. Verfahren nach Anspruch 1, wobei die Imprägnierdispersion die Harzkomponente in einer Menge von mindestens 40 Gew.% umfasst, bezogen auf das Gewicht der Imprägnierdispersion.

3. Verfahren nach einem der vorhergehenden Ansprüche, wobei das Gewichtsverhältnis der Harzkomponente von Schritt b) zu duroplastischem Harz von Schritt c) 0,4 bis 1,5, vorzugsweise 0,8 bis 1,0 beträgt.

4. Verfahren nach einem der vorhergehenden Ansprüche, wobei das Gewichtsverhältnis des Trägermaterials von Schritt a) zu Harzkomponente von Schritt b) zu duroplastischem Harz von Schritt c) etwa 1/1/1 beträgt.

5. Verfahren nach einem der vorhergehenden Ansprüche, wobei das Polyacrylat Acryl- und Methacrylester als Monomere umfasst.

6. Verfahren nach einem der vorhergehenden Ansprüche, wobei die Harzkomponente aus dem Polyacrylat und dem duroplastischen Harz besteht.

7. Verfahren nach einem der vorhergehenden Ansprüche, wobei das duroplastische Harz ein PF-Harz oder ein MF-Harz oder eine Mischung davon ist.

8. Verfahren nach einem der vorhergehenden Ansprüche, wobei die Beschichtungszusammensetzung das duroplastische Harz in einer Menge von mindestens 45 Gew.%, vorzugsweise mindestens 50 Gew.% umfasst, bezogen auf das Gewicht der Beschichtungszusammensetzung.

9. Verfahren nach einem der vorhergehenden Ansprüche, wobei das Trägermaterial Papier, vorzugsweise Kraftpapier oder Sackpapier ist.

10. Verfahren nach einem der vorhergehenden Ansprüche, des Weiteren umfassend einen Schritt des Trocknens nach Schritt c) .

11. Folie, die nach dem Verfahren gemäß einem der vorhergehenden Ansprüche hergestellt ist.

12. Verwendung der Folie nach Anspruch 11 zum Überziehen eines Paneels, insbesondere eines Materials auf Holzbasis.

13. Verfahren zum Überziehen eines Paneels, vorzugsweise eines Materials auf Holzbasis, mit einer Folie, umfassend die folgenden Schritte:
a) Bereitstellen einer Folie, die nach dem Verfahren gemäß Anspruch 11 hergestellt ist,
b) Aufbringen der Folie auf das Paneel mittels Wärme und Druck, vorzugsweise durch Heißpressen.

14. Verfahren nach Anspruch 13, wobei Schritt b) bei einer Temperatur zwischen 110 °C und 180 °C, vorzugsweise zwischen 120 °C und 150 °C, und bei einem Druck zwischen 7 kg/cm² und 22 kg/cm², vorzugsweise zwischen 9 kg/cm² und 20 kg/cm², für 2 bis 15 Minuten, vorzugsweise 4 bis 10 Minuten durchgeführt wird.

15. Verfahren nach Anspruch 13 oder 14, wobei Schritt b) bei einer Temperatur von 135 °C und einem Druck von 18 kg/cm² für etwa 6 Minuten durchgeführt wird.

16. Verfahren nach einem der Ansprüche 13 bis 15, das die folgenden Schritte umfasst:
a) Bereitstellen eines Kraftpapiers mit einem Gewicht pro Flächeneinheit von 30 bis 90 g/m², vorzugsweise 40 g/m² oder 80 g/m²,
b) Imprägnieren des Papiers mit einer Imprägnierdispersion, die mindestens 40 Gew.% einer Harzkomponente umfasst, wobei die Harzkomponente ein Polyacrylat in einer Menge von mindestens 98 Gew.% umfasst, bezogen auf das Gewicht der Harzkomponente, was zu einem nassimprägnierten Papier führt.
c) Beschichten des nassimprägnierten Papiers mit einer Beschichtungszusammensetzung, die mindestens 50 Gew.% PF-Harz umfasst, bezogen auf das Gewicht der Beschichtungszusammensetzung,
d) Trocknen des nassimprägnierten und beschichteten Papiers, was zu einer Folie zum Überziehen eines Paneels, vorzugsweise eines Materials auf Holzbasis, insbesondere Sperrholz führt,
e) Aufbringen der Folie auf das Paneel bei einer Temperatur zwischen 120 °C und 150 °C, vorzugsweise 135 °C, einem Druck zwischen 9 kg/cm² und 20 kg/cm², vorzugsweise 18 kg/cm², für 4 bis 8 Minuten, vorzugsweise für etwa 6 Minuten.

17. Geschichtetes Material, das nach einem Verfahren gemäß einem der Ansprüche 13 bis 16 hergestellt ist.

18. Geschichtetes Material nach Anspruch 17, wobei ein Verhältnis eines Mindestbiegeradius des geschichteten Materials gemäß Anspruch 17 und desselben Paneels, das mit einem Papier überzogen ist, welches mit einem phenolischen Harz imprägniert ist, kleiner als 0,8, vorzugsweise kleiner als 0,7, noch bevorzugter kleiner als 0,6 ist.

19. Geschichtetes Material nach Anspruch 17 oder 18, wobei ein Verhältnis eines Mindestbiegeradius des geschichteten Materials gemäß Anspruch 17 oder 18 und desselben Paneels, das mit einem Papier überzogen ist, welches mit einem phenolischen Harz imprägniert ist, kleiner als 0,5 ist.

20. Holzprodukt, umfassend das geschichtete Material gemäß einem der Ansprüche 17 bis 19.

## Revendications

1. Procédé de fabrication d'un film destiné à recouvrir un panneau, en particulier un matériau à base de bois, comprenant les étapes consistant à :
a) fournir un matériau de support, où le matériau de support est un matériau qui est sélectionné parmi le groupe constitué de papier, de fibre de verre, de carton et de textiles incluant des textiles tissés et non tissés,
b) imprégner le matériau de support avec une dispersion d'imprégnation comprenant un composé de résine lequel comprend un polyacrylate, ce qui conduit à un matériau de support imprégné humide, où la dispersion d'imprégnation comprend le composé de résine selon une proportion d'au moins 30 % en poids sur la base de la masse de la dispersion d'imprégnation, où le composé de résine i) se compose du polyacrylate ou ii) comprend le polyacrylate et une autre résine thermodurcissable, qui est sélectionnée parmi le groupe constitué de résine de phénol-formaldéhyde (PF), de résine mélamine-formaldéhyde (MF), de résine d'urée-formaldéhyde (UF), de phénol-résorcinol-formaldéhyde (PRF), de résine de mélamine-urée-formaldéhyde (MUF), de mélange de MF-PF, de mélange de PF-UF, de mélange de MU-PF et de mélanges de ceux-ci, où le composé de résine comprend le polyacrylate selon une proportion d'au moins 60 % et la résine thermodurcissable selon une proportion d'au moins 20 % en poids sur la base de la masse du composé de résine et, où le matériau de support imprégné humide présente une teneur totale en composés volatils résiduels de plus de 10 % en poids, où la teneur totale en composés volatils résiduels est mesurée en laissant un échantillon dans une étuve chaude pendant 5 min à 160 °C et en calculant la quantité de composés volatils perdus pendant le séchage,
c) revêtir le matériau de support imprégné humide avec une composition de revêtement comprenant une résine thermodurcissable, où la résine thermodurcissable lors de l'étape c) est sélectionnée parmi le groupe constitué de résine de phénol-formaldéhyde (PF), de résine mélamine-formaldéhyde (MF), de résine d'urée-formaldéhyde (UF), de phénol-résorcinol-formaldéhyde (PRF), de résine de mélamine-urée-formaldéhyde (MUF), de mélange de MF-PF, de mélange de PF-UF, de mélange de MU-PF et de mélanges de ceux-ci.

2. Procédé selon la revendication 1, dans lequel la dispersion d'imprégnation comprend le composé de résine selon une proportion d'au moins 40 % en poids sur la base de la masse de la dispersion d'imprégnation.

3. Procédé selon l'une quelconque des revendications précédentes, dans lequel le rapport massique de composé de résine de l'étape b) pour résine thermodurcissable de l'étape c) va de 0,4 à 1,5, de préférence de 0,8 à 1,0.

4. Procédé selon l'une quelconque des revendications précédentes, dans lequel le rapport massique de matériau de support de l'étape a) pour composé de résine de l'étape b) pour résine thermodurcissable de l'étape c) est d'environ 1/1/1.

5. Procédé selon l'une quelconque des revendications précédentes, dans lequel le polyacrylate comprend des esters acryliques et méthacryliques comme monomères.

6. Procédé selon l'une quelconque des revendications précédentes, dans lequel le composé de résine se compose du polyacrylate et de la résine thermodurcissable.

7. Procédé selon l'une quelconque des revendications précédentes, dans lequel la résine thermodurcissable est une résine de PF ou une résine de MF ou un mélange de celles-ci.

8. Procédé selon l'une quelconque des revendications précédentes, dans lequel la composition de revêtement comprend la résine thermodurcissable selon une proportion d'au moins 45 % en poids, de préférence d'au moins 50 % en poids, sur la base de la masse de la composition de revêtement.

9. Procédé selon l'une quelconque des revendications précédentes, dans lequel le matériau de support est du papier, de préférence du papier kraft ou du papier pour sacs.

10. Procédé selon l'une quelconque des revendications précédentes, comprenant en outre une étape de séchage après l'étape c).

11. Film préparé par le procédé selon l'une quelconque des revendications précédentes.

12. Utilisation du film selon la revendication 11 afin de recouvrir un panneau, en particulier un matériau à base de bois.

13. Procédé de recouvrement d'un panneau, de préférence d'un matériau à base de bois, avec un film comprenant les étapes suivantes consistant à :
a) fournir un film préparé par le procédé selon la revendication 11,
b) appliquer le film sur le panneau à l'aide de chaleur et de pression, de préférence par pressage à chaud.

14. Procédé selon la revendication 13, dans lequel l'étape b) est réalisée à une température comprise entre 110 °C et 180 °C, de préférence entre 120 °C et 150 °C, et à une pression comprise entre 7 kg/cm² et 22 kg/cm², de préférence entre 9 kg/cm² et 20 kg/cm², pendant de 2 à 15 minutes, de préférence pendant de 4 à 10 minutes.

15. Procédé selon la revendication 13 ou 14, dans lequel l'étape b) est réalisée à une température de 135 °C, et à une pression de 18 kg/cm², pendant environ 6 minutes.

16. Procédé selon l'une quelconque des revendications 13 à 15, lequel comprend les étapes suivantes consistant à :
a) fournir un papier kraft présentant un grammage (masse par unité de surface) de 30 à 90 g/m², de préférence de 40 g/m² ou de 80 g/m²,
b) imprégner le papier avec une dispersion d'imprégnation comprenant au moins 40 % en poids de composé de résine, où le composé de résine comprend un polyacrylate selon une proportion d'au moins 98 % en poids sur la base de la masse du composé de résine, ce qui conduit à un papier imprégné humide,
c) revêtir le papier imprégné humide avec une composition de revêtement comprenant au moins 50 % en poids de résine de PF sur la base de la masse de la composition de revêtement,
d) sécher le papier imprégné humide et revêtu, ce qui conduit à un film destiné à recouvrir un panneau, de préférence un matériau à base de bois, de façon davantage préférée un contreplaqué,
e) appliquer le film sur le panneau à une température comprise entre 120 °C et 150 °C, de préférence à 135 °C, et à une pression comprise entre 9 kg/cm² et 20 kg/cm², de préférence à 18 kg/cm², pendant de 4 à 8 minutes, de préférence pendant environ 6 minutes.

17. Matériau stratifié préparé par le procédé selon l'une quelconque des revendications 13 à 16.

18. Matériau stratifié selon la revendication 17, dans lequel un rapport d'un rayon de flexion minimal du matériau stratifié selon la revendication 17 et du même panneau recouvert d'un papier imprégné avec une résine phénolique est inférieur à 0,8, de préférence inférieur à 0,7, de façon davantage préférée inférieur à 0,6.

19. Matériau stratifié selon la revendication 17 ou 18, dans lequel un rapport d'un rayon de flexion minimal du matériau stratifié selon la revendication 17 ou 18 et du même panneau recouvert d'un papier imprégné avec une résine phénolique est inférieur à 0,5.

20. Produit de bois comprenant le matériau stratifié selon l'une quelconque des revendications 17 à 19.
